# EUROPEAN PATENT APPLICATION

(11) **EP 0 693 426 A1**
(43) Date of publication of application: **24.01.1996**
(21) Application number: 94305455.1
(22) Date of filing: 22.07.1994
(51) Int. Cl.: B65B 61/18

(54) **Container spout fitment applicator**

(71) Applicant: ELOPAK SYSTEMS AG, CH-8152 Glattbrugg (CH)
(72) Inventor: Owen, Barry Charles, Southfield, Michigan 48076 (US); Paulin, Robert C., Commerce Towship, Michigan 48382 (US); Pape, Leslie, Novi, Michigan 48375 (US); Neumayer, Jack M., White Lake, Michigan 48383 (US)
(74) Representative: Burrows, Anthony Gregory

(57) **Abstract**

A container fitment applicator 26 applies a flanged pour spout fitment 24 through an opening in a carton top panel while the carton 16 is on a mandrel 12 of a turret 10 of a forming, filling and sealing machine. The applicator 26 includes a rotatable shaft having a bar secured thereto, a vacuum cup 36 or location spigot mounted on one end of the bar, and a roller 38 mounted on the other end of the bar, with a chute and feeder 50 co-ordinating the supplying of one fitment 24 at a time to the vacuum cup 36. In one embodiment, the roller 38 engages a first cam 42 which serves to pivot the bar to position the fitment 24 in the centre portion of the mandrel 12 to permit loading the carton 16 onto the mandrel 12, with the fitment 24 entering the panel opening as the roller 38 leaves the cam 42 under the force of a spring 40 operatively connected to the bar. In a second embodiment, a spring positions the bar and fitment 24 in the centre portion of the mandrel for the carton loading, and a second cam engaged by the roller 38 serves to extend the fitment 24 into the panel opening. The flange of the fitment 24 is sealed by an ultrasonic sealer 60 with horn 62 to the inner surface of the top panel around the opening while the second cam 44 backs up the roller 38.

## Description

This invention relates generally to container fitment applicators, more particularly but not exclusively for use in carton forming, filling and sealing machines which are adapted to apply pour spout fitments while the cartons are being processed on mandrels of a turret thereof.

Forming, filling and sealing machines having pour spout applicators operatively mounted thereon are known. For example, GB-A-2,238,287 discloses an application station at which a rotatable bar is provided, with the bar having a boss projecting therefrom. A pouring spout is placed on the boss by external means. As the carton is indexed into the application station, the bar is rotated in the direction of the carton travel and into the open top of each carton, aligning the boss with an opening formed in a selected panel of the top closure of the carton; the boss and pouring spout are moved laterally through the opening; the inner flanged end of the pouring spout is secured, such as by ultrasonic welding, to the inner wall around the opening; and the boss is withdrawn from the opening and then rotated out of the open top.

Other pouring spout applicators are disclosed in US-A-4,788,811 and US-A-4,386,923. US-A-4,788,811 discloses a horizontally elongated pour spout fitment attaching turret at a location upstream of the usual turret and radial mandrels on which the bottom end closure is folded and sealed. The fitment attaching turret includes a pusher at one station for pushing an open-ended package onto a sucker device holding and inserting a pour spout fitment into an opening in a package top panel. The fitment attaching turret is then rotated to a second station where an anvil is axially inserted into the package, co-operable with an ultrasonic horn for sealing a flange of the fitment to the inner surface of the top panel.

US-A-4386923 discloses a bag-in-box arrangement wherein a fitment is attached to the bag which is then inserted through a hole in a flap of the box, while both are in the collapsed or blank state.

EP-A-0480111 discloses a container spout applicator in which a vertical mandrel of a cross-section suitable for introduction into the upper part of a container is fixed to a mandrel support displaceable axially of the mandrel to produce this introduction into the container. In the mandrel and the mandrel support is mounted a reciprocable, vertical slide mounted to advance downwardly with an initial motion axially of the mandrel and a second and final motion obliquely of the mandrel axis and to retract upwardly with an initial motion obliquely of the mandrel axis and a second and final motion axially of the mandrel. The oblique motion is obtained by an oblique face of the lower end of the slide sliding on an oblique guide surface machined on the inside of the mandrel and by a cranked, upper section of the slide sliding between two guide studs on the mandrel support. A spout carrier including at its lower end a spout holder in the form of a centering projection is mounted upon the slide in such manner as to be axially displaceable relative to the slide while remaining continuously in contact with the slide. This can be achieved by using retaining screws sliding in suitable vertical slots in the slide. A helical compression spring in the spout carrier continuously urges the spout holder downwards relative to the slide, but downward movement of the spout holder is limited by its having an adjustable stop which first abuts and then slides upon a horizontal guide surface of the mandrel support. Thus, downward advance of the slide has the effect firstly of vertically lowering a spout on the spout holder and then horizontally moving the spout to insert it into a hole in a wall of the container received on the mandrel. A sonotrode is applied to the outside surface of the wall to heat-and pressure-seal a flange on the spout to the inside surface of the wall.

According to one aspect of the present invention, there is provided apparatus comprising a mandrel for fittingly receiving an open-ended container externally of the mandrel, and fitment-applying means for applying a fitment to a wall of said container from internally of said container, said fitment-applying means comprising a fitment-holder and drive means serving to displace said fitment-holder to towards said wall to apply a fitment to said container, said fitment-holder being located internally of said mandrel for applying said fitment to said wall while said container is received over said mandrel, characterized in that said fitment-applying means includes a lever turnable about an axis and carrying said fitment-holders at one end thereof and arranged, at a distance from said fitment-holder, to be acted upon by said drive means.

Owing to the use of a lever, it is possible to minimize the total area of sliding interface(s) in the applicator and thus to minimize the frictional forces to be overcome by the drive means; it is also possible to arrange for the sliding interface(s) to be permanently outside the container, so that any lubricating substance for such interface(s) should remain outside the container; it is also possible to ensure that those surfaces of the applicator which, for at least some part of the operating cycle, are within the container are fully exposed (unlike sliding interfaces) and thus readily cleanable; if the fitment-holder operates through use of a vacuum, connection to a vacuum source is relatively easy; and it is further possible to simplify the applicator, thereby to reduce its cost and to reduce its weight and thus inertial forces during operation.

According to a second aspect of the present invention, there is provided apparatus comprising frame means, fitment-applying means for applying a fitment to a wall of an open-ended container from internally of said container, container-holding means for holding said container in a position to have said fitment applied thereto, said fitment-applying means comprising a fitment-holder and drive means serving to displace said fitment-holder towards said wall, and said drive means comprising camming means, and displacing means serving to displace said fitment-applying means relative to said camming means, whereby said camming means acts upon said fitment-applying means, characterized in that said displacing means comprises a rotary turret rotatable relative to said frame means, and said camming means is fixed relative to said frame means and extends around said turret.

Thus, the rotary motion of the turret is employed to drive the fitment-applying means, thereby avoiding any need to provide a drive dedicated to the applicator itself.

In order that the invention may be clearly understood and readily carried into effect, reference will now be made, by way of example, to the accompanying drawings, in which:-
Figure 1 is a plan view of a carousel-type turret of a carton forming, filling and sealing machine;
Figure 2 is an enlarged side elevational view of a fitment feeder portion of Figure 1;
Figure 3 is an enlarged side elevational view of a pour spout fitment applicator portion of Figure 1;
Figure 4 is a view, partially broken away, taken along the plane of the line 4-4 of Figure 3, and looking in the direction of the arrows;
Figure 5 is a perspective view of the finished carton product;
Figure 6 is a perspective view of a pour spout fitment; and
Figure 7 is a side elevational view of an alternate embodiment of the Figure 2 structure.

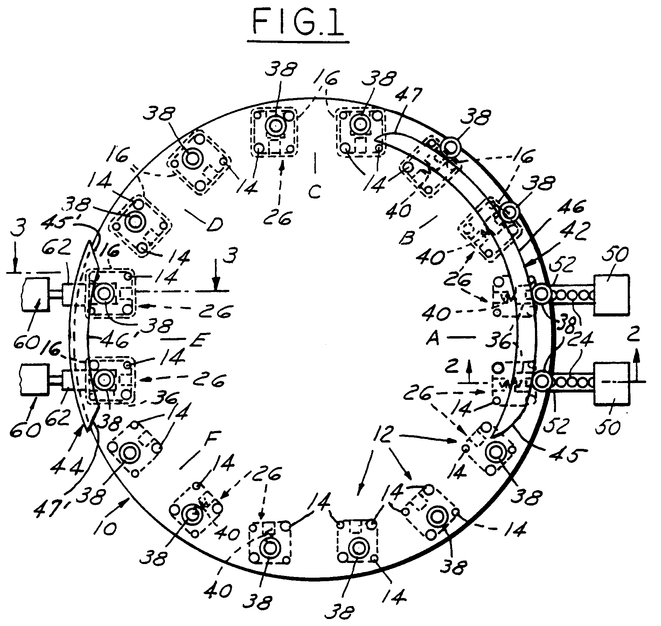

Referring now to the drawings in greater detail, Figure 1 illustrates an indexable carousel-type turret 10 of a carton forming, filling and sealing machine. The turret 10 includes a plurality of pairs of mandrels 12, with each mandrel consisting of four corner posts 14 onto which a thermoplastic coated paperboard tubular carton 16 is slidably loaded and the bottom closure thereof closed and sealed. Typically, the bottom-sealed, open-top carton 16 is pulled off the mandrels, onto a conveyor (not shown) and carried to conventional filling and top closing and sealing stations.

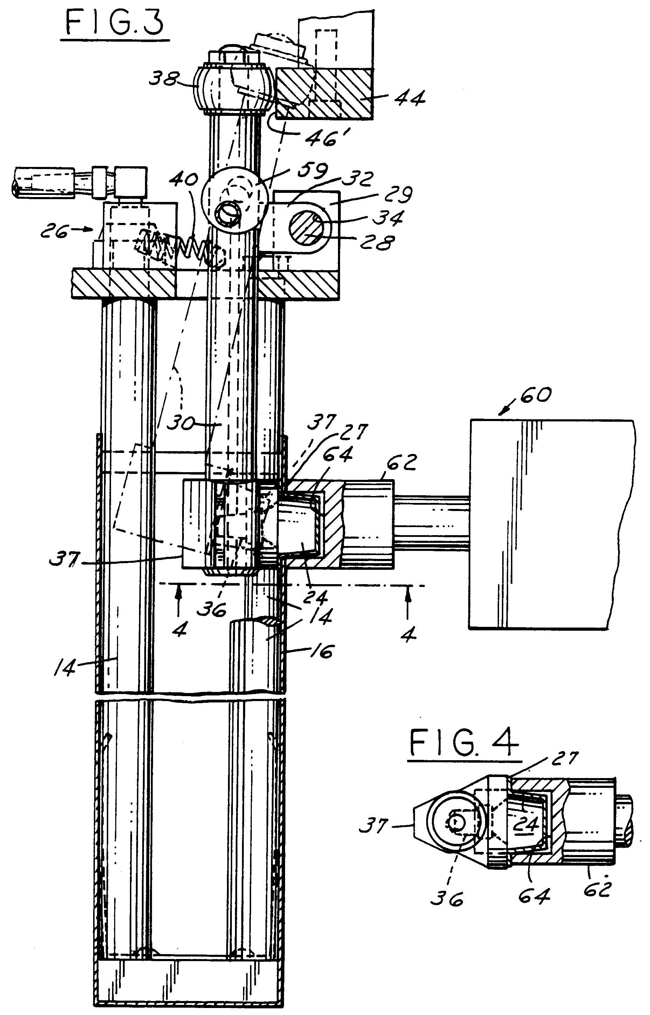

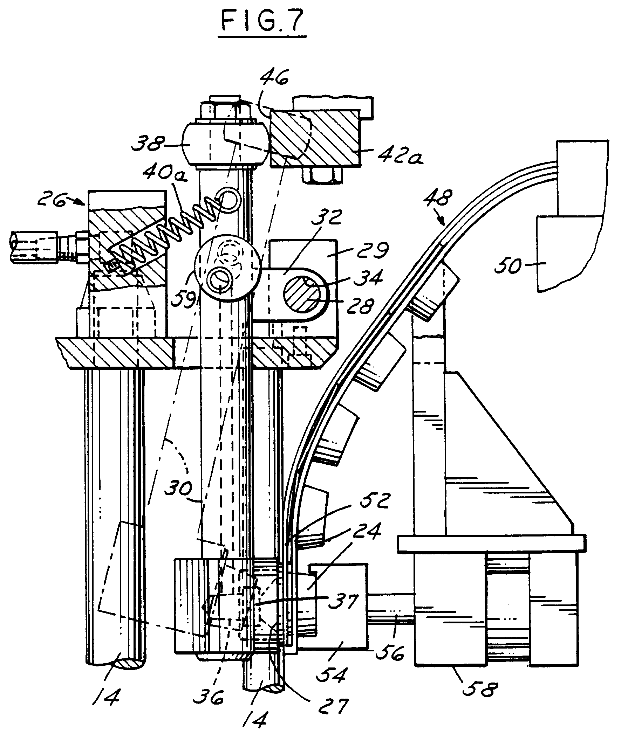

Each carton 16 includes top closure panels 18 (Figure 5) whereof one panel 20 has an opening 22 formed therethrough, suitable for having a pour spout fitment 24 mounted and secured therein by a pour spout fitment applicator 26 (Figure 3) while the carton is on the turret 10. The fitment 24 includes a flange 27, as shown in Figure 6.

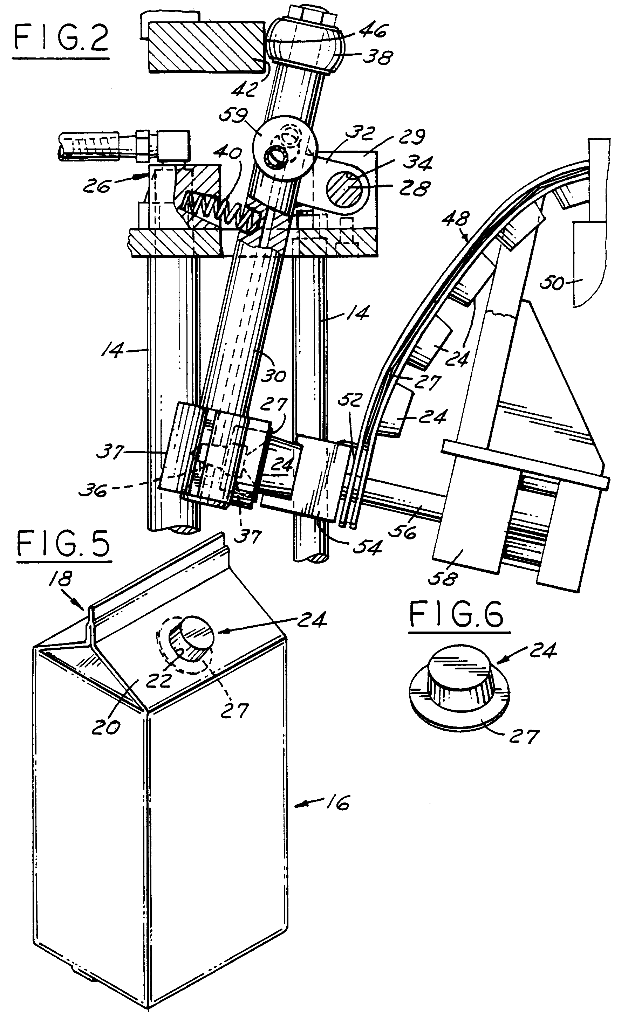

As shown in Figures 2 and 3, the applicator 26 includes a shaft 28 pivotally mounted on a pivot block 29 secured to the turret 10. A projection 32 includes an opening 34 secured around the shaft 28 for rotation therewith. The distal end of the projection 32 is secured to a bar 30. The bar 30 extends vertically into the space within the four corner posts 14. A vacuum cup 36 or mechanical device, such as a location spigot, is mounted on the lower or anvil end 37 of the bar 30, and a roller 38 is rotatably mounted on the upper end portion of the bar. The roller 38 is urged toward the outside (Figure 1) of the turret 10 by the force of a spring 40 (Figures 2 and 3) against the bar 30 in a counterclockwise direction about the shaft 28.

As shown in Figure 1, a pair of circumferentially spaced-apart cams 42 and 44 extend, and are mounted at predetermined locations, around the turret 10. The cams 42 and 44 include respective entering ramp surfaces 45 and 45', working surfaces 46 and 46' and leaving ramp surfaces 47 and 47' for engagement by the rollers 38, as will be explained.

While cams 42 and 44 are shown in Figure 1, along with pairs of mandrels 12, the following applicator description will relate to a single application.

As shown in Figure 2, with the anvil 37 being in a retracted position due to contact of the roller 38 with the cam 42, a chute 48 is filled with a row of pour spout fitments 24 supplied in an oriented attitude by any suitable means, such as a vibratory parts feeder, represented as 50. The chute 48 is inclined at a predetermined angle from the parts feeder 50 to a location adjacent the two outer posts 14 of one of the two mandrels at a selected station, say, "A", in Figure 1. The lower end portion 52 of the chute 48 is angled, as shown in Figure 2, such that a pusher unit 54 provided on the end of a piston 56 extending from a suitable cylinder 58 is adapted to engage the first-in-line fitment 24 and push it through the open back of the chute 48 and between the two outside posts 14 into contact with each vacuum cup or location spigot. Vacuum is applied, when appropriate, through an inlet 59, shown in Figure 3. At the time of this action, the mandrel 12 is void of the paperboard carton 16.

Once a fitment 24 is loaded onto a vacuum cup 36 or location spigot, the applicator 26 is indexed into station "B", with the roller 38 still in contact with the cam 42 to maintain the bar 30 in its angled position, which is significantly less than a right angle to the vertical, preferably less than 30°, in fact approximately 13° in Figure 2. It is at this station B that a tubular carton 16 is slidably loaded onto the mandrel 12 around the anvil end 37 and its associated vacuum cup 36 or location spigot. The now loaded mandrel 12 is indexed to a station "C" where the bar is turned into a vertical position and the fitment 24 is automatically extended through the opening 22 as the roller 38 follows and then departs from the ramp surface 47, due to the force of the spring 40 against the bar 30. Also at station C, the bottom closure panels of the tubular carton 16 are formed flat, followed by indexing to station "D", where the flat panels are heated and sealed in any usual manner. If desired, the bottom forming sequence may precede, or be performed concurrently with, the fitment application step.

Next, the mandrel 12 is indexed to station "E", with the roller 38 having engaged the ramp surface 45' of the cam 44 and coming to rest on the surface 46', thereby forming a resistance to sealing forces. An ultrasonic sealer 60 including a retractable horn 62 is positioned adjacent the top closure panel 20, with its axis aligned with the opening 22 in the panel. A recess 64 is formed in the end of the horn 62, whereby that end is adapted to surround the extended portion of the fitment 24 and abut against the panel 20 opposite the flange 27 which is backed up by the anvil end 37. When energized, the vibrating horn 62 seals the flange 27 to the inner surface of the panel 20. The vacuum on the vacuum cup 36 is then relieved via the inlet 59, and the mandrel 12 is indexed to station "F", where the carton 16 is pulled off the mandrel by any conventional means and placed onto a conveyor (not shown) to be carried to filling and top forming and sealing stations prior to discharge. The discharged filled and sealed carton is shown in Figure 5.

The cycle is repeated on each successive pair of mandrels 12.

Referring now to Figure 7, it is noted that a cam 42a may be used in lieu of the cam 42 of Figure 2, and positioned on the opposite side of the roller 38. In this embodiment a spring 40a is adapted to urge the bar 30 in a clockwise direction about the shaft 28, into the phantom position in the Figure. The lower end portion 52 of the chute 48 is vertical to facilitate the application of the fitment 24 by the horizontal pusher unit 54, while the bar 30 is in the vertical orientation caused by the cam 42a. At station C, after the roller 38 leaves the cam 42a, and the spring 40a positions the bar 30 in the phantom position shown in Figure 7, a carton 16 is loaded onto the mandrel 12 around the corner posts 14. After folding, heating and sealing at the stations C and D, upon engaging the cam 44 at station E, the bar 30 is caused to pivot into the solid line position in Figure 3, to thereby project the fitment 24 into the opening 22, while the cam 44 provides the resistance to the sealing forces, as discussed above.

The invention is applicable to either a carousel type turret or a turret having a horizontal axis of rotation, with the mandrels thereof having front central openings therein. The carton panel to which the pour spout fitment is applied could be part of a top closure panel which is completed as a flat top carton. While eight pairs of mandrels are shown in Figure 1 as being indexed together, any suitable number of single or multiple mandrels may be employed.

## Claims

1. Apparatus comprising a mandrel (12) for fittingly receiving an open-ended container (16) externally of the mandrel (12), and fitment-applying means (26) for applying a fitment (24) to a wall (20) of said container (16) from internally of said container (16), said fitment-applying means (26) comprising a fitment-holder (36) and drive means (40,40a,42,42a,44) serving to displace said fitment-holder (36) to towards said wall (20) to apply a fitment (24) to said container (16), said fitment-holder (36) being located internally of said mandrel (12) for applying said fitment (24) to said wall (20) while said container (16) is received over said mandrel (12), characterized in that said fitment-applying means (26) includes a lever (30) turnable about an axis and carrying said fitment-holder (36) at one end thereof and arranged, at a distance from said fitment-holder (36), to be acted upon by said drive means (40, etc.).

2. Apparatus according to claim 1, wherein, throughout each opening cycle of said fitment-applying means (26), said lever (30) is oscillated through significantly less than a right-angle.

3. Apparatus according to claim 2, wherein said angle is less than 30°.

4. Apparatus according to any preceding claim, wherein said lever (30) is an oscillatable bar.

5. Apparatus according to any preceding claim, wherein said fitment holder (36) comprises anvil means (37), said apparatus further comprising supply means (48,54) for supplying the fitment-holder (36) through an open side of said mandrel (12), sealing means (62) for sealing said fitment (24) in an opening (22) in said wall (20) against said anvil means (37), and loading means for loading said container (16) onto said mandrel (12), said drive means (40, etc.) serving also to displace said fitment-holder (36) into a position of holding said fitment (24) in the centre of the mandrel (12), thereby permitting said loading means to load said container (16) onto said mandrel (12).

6. Apparatus according to claim 5, wherein said supply means (48,54) comprises a chute (48) for containing aligned oriented fitments (24), and feeder means (54) for pushing the first-in-line fitment (24) from said chute (48) through said open side of said mandrel (12) into holding engagement with said fitment-holder (36).

7. Apparatus according to claim 5 or 6, wherein said sealing means (62) comprises an ultrasonic sealer (60) with a retractable horn (62) adapted to engage the outer surface of said wall (20) while said fitment (24) is in place in said opening (22) to thus weld a flange (27) of said fitment (24) to the inner surface of said wall (20).

8. Apparatus according to any preceding claim, and further comprising frame means and displacing means serving to displace said lever (30) and thus said fitment holder (36) relative to said frame means, said drive means (40, etc.) comprising camming means (42,42a) fixed relative to said frame means, whereby the action of said displacing means causes said camming means (42,42a) to drive said lever (30) and thus said fitment-holder (36).

9. Apparatus according to any preceding claim, wherein said drive means (40,etc.) includes resilient means (40a) operatively connected to said lever (30) for turning said lever (30) into a position of holding said fitment (24) in the centre of the mandrel (12).

10. Apparatus according to claim 8, wherein said drive means (40,etc.) includes resilient means (40) operatively connected to said lever (30) and, once said lever (30) is no longer acted upon by said camming means (42), effective to displace said fitment-holder (36) towards said wall (20).

11. Apparatus comprising frame means, fitment-applying means (26) for applying a fitment (24) to a wall (20) of an open-ended container (16) from internally of said container (16), container-holding means (12) for holding said container (16) in a position to have said fitment (24) applied thereto, said fitment-applying means (26) comprising a fitment-holder (36) and drive means (40,40a,42,42a,44) serving to displace said fitment-holder (36) towards said wall (20), and said drive means (40,etc.) comprising camming means (42,42a,44), and displacing means serving to displace said fitment-applying means (26) relative to said camming means (42,42a,44), whereby said camming means (42,42a,44) acts upon said fitment-applying means (26), characterized in that said displacing means comprises a rotary turret (10) rotatable relative to said frame means, and said camming means (42,42a,44) is fixed relative to said frame means and extends around said turret (10).

12. Apparatus according to claim 11, wherein said camming means (42a) serves to displace said fitment-holder (36) outwardly towards said wall (20).

13. Apparatus according to claim 11, wherein said camming means (42) serves to displace said fitment-holder (36) inwardly away from said wall (20).

14. Apparatus according to claim 11, wherein said camming means (44) serves to retain said fitment-holder (36) in an outwardly displaced condition at said wall (20).
